# FASCICULE DE BREVET EUROPEEN

(11) **EP 0 793 282 B1**
(45) Date de publication et mention de la délivrance du brevet: **02.11.2000**
(21) Numéro de dépôt: 97810098.0
(22) Date de dépôt: 25.02.1997
(51) Int. Cl.: H01L 41/09, H02N 2/12

(54) **Moteur piézoélectrique à onde progressive**
Piezo-Wanderwellenmotor
Piezoelectric travelling wave motor

(30) Priorité: 29.02.1996 FR 9602549
(43) Date de publication de la demande: 03.09.1997
(73) Titulaire: FIGEST B.V., 1066 GH Amsterdam (NL)
(72) Inventeur: Chatellard, David Ambroise, 74170 Saint Gervais les Bains (FR)
(74) Mandataire: Meylan, Robert Maurice

(56) Documents cités:
- WO-A-95/05682
- FR-A- 2 690 018
- PATENT ABSTRACTS OF JAPAN vol. 013, no. 581 (E-865), 21 Décembre 1989 & JP 01 243860 A (MATSUSHITA ELECTRIC IND CO LTD), 28 Septembre 1989

## Description

La présente invention a pour objet un moteur piézo-électrique à onde progressive comprenant au moins un stator constitué d'un corps annulaire auquel sont associés deux groupes d'éléments piézo-électriques constitués de bâtonnets cylindriques de céramique polarisés indépendants les uns des autres, disposés perpendiculairement au stator, c'est-à-dire parallèlement à l'axe du moteur, répartis sur le stator, en contact permanent, par l'une de leurs extrémités, avec le stator et, par l'autre extrémité, avec un connecteur par l'intermédiaire duquel les bâtonnets sont excités par un courant alternatif avec un déphasage de π/2 entre les groupes de bâtonnets de manière à engendrer à la surface du stator une déformation en forme d'onde progressive, et un rotor maintenu élastiquement en contact avec le stator pour son entraînement en rotation par l'onde progressive engendrée sur le stator.

Un tel moteur est connu du brevet FR 2 709 214. La réalisation pratique du moteur décrit dans ce brevet est constituée de deux stators entre lesquels sont montés des bâtonnets en céramique à double polarisation maintenus en position par un disque en matière synthétique et de deux rotors entraînés respectivement par chacun des stators, l'ensemble étant monté dans un boîtier constitué de deux coquilles dont l'assemblage assure une pression sur les rotors par l'intermédiaire d'une rondelle élastique. Les bâtonnets en céramique forment une cage d'écureuil traversée axialement par un arbre sur lequel sont fixés les rotors.

Dans un développement ultérieur de ce moteur, les bâtonnets de céramique sont distincts pour chacun des stators et l'alimentation en tension des bâtonnets est assurée par un connecteur pincé, au milieu du moteur, entre les bâtonnets de chacun des stators, ces bâtonnets étant en outre soumis à une précontrainte qui a pour effet de les presser contre le connecteur. Le connecteur est constitué de deux pièces métalliques découpées formant deux pistes d'alimentation, une pour chaque groupe de bâtonnets. Ces pièces métalliques peuvent être sur le même plan, l'une étant située autour de l'autre, ou sur deux plans différents séparés par une rondelle en matériau diélectrique résistant à la tension crête d'alimentation. Les bâtonnets sont fixés au stator au moyen de colle, le stator présentant en outre éventuellement des encoches de positionnement pour ces bâtonnets.

Lors de la fabrication d'un tel moteur, les bâtonnets de céramique doivent être maintenus en place tant que les stators ne sont pas assemblés par les moyens de précontrainte, de sorte qu'une telle construction ne se prête pas à une fabrication de petits moteurs car il n'existe aucune structure économique à même de maintenir les bâtonnets en place pour le montage. Seules des techniques de collage et de positionnement peuvent résoudre à grands frais ce problème qui se pose également pour un moteur à stator et rotor uniques.

L'invention a pour but de réaliser un moteur piézo-électrique du type décrit plus haut, mais d'une structure telle que sa fabrication, plus particulièrement l'assemblage de ses composants soit aisé et se prête à la fabrication de moteurs de faibles dimensions.

A cet effet, les bâtonnets sont logés dans un barillet en matériau isolant dont les trous, contenant chacun un bâtonnet, ont un diamètre supérieur au diamètre des bâtonnets sur la plus grande partie de leur longueur et un rétrécissement de diamètre approximativement égal au diamètre des bâtonnets de manière à maintenir les bâtonnets par frottement.

Lors de la fabrication du moteur, les bâtonnets de céramique sont tout d'abord introduits dans le barillet dans lequel ils sont positionnés angulairement et maintenus par les rétrécissements des trous du barillet. Le barillet équipé de ces bâtonnets constitue ainsi un module facilement manipulable qui peut être aisément enfilé sur l'arbre du rotor pour son serrage entre le stator et le connecteur.

La position des rétrécissements des trous du barillet est, de préférence, telle, que les bâtonnets sont pincés à proximité immédiate de leur noeud de vibration de manière à ne pas perturber le régime vibratoire stationnaire des bâtonnets.

Le moteur sera constitué, de préférence, de deux stators et de deux rotors, comme le moteur de l'art antérieur, c'est-à-dire également deux barillets qui sont, de préférence, pincés entre les stator et un connecteur central. Le positionnement angulaire réciproque des barillet peut être assuré par tous moyens connus, en particulier par un emboîtement à profils conjugués. Il suffit d'un tenon formé sur l'un des barillets s'engageant dans une mortaise de l'autre barillet.

Le connecteur peut être réalisé de diverses manières, mais, dans tous les cas, il sera réalisé, de préférence, de telle manière qu'il peut être fixé par emboîtage par l'un des barillets.

Le dessin annexé représente, à titre d'exemple, trois modes d'exécution du moteur selon l'invention.

La figure 1 est une vue en coupe axiale d'un moteur selon une première forme d'exécution.

La figure 2 représente le connecteur du moteur représenté à la figure 1.

La figure 3 représente une autre forme d'exécution de connecteur utilisable dans le moteur représenté à la figure 1.

La figure 4 est une vue éclatée des barillets et du connecteur selon un second mode d'exécution.

La figure 5 est une vue de la moitié gauche du connecteur dans une direction A parallèle à l'axe des barillets.

La figure 6 est une vue de la partie droite du connecteur dans une direction B parallèle à l'axe des barillets.

La figure 7 représente les barillets de la figure 4 contenant les bâtonnets céramique et assemblés entre les stators, mais sans le connecteur.

La figure 8 est une vue en coupe selon VIII-VIII de la figure 7.

La figure 9 illustre un mode de découpage particulièrement économique du connecteur représenté aux figures 4, 5 et 6.

La figure 10 représente la partie statorique d'un moteur selon un troisième mode d'exécution.

La figure 11 est une vue en coupe selon XI-XI de la figure 10.

La figure 12 représente les deux faces du connecteur en forme de disque prévu pour ce troisième mode d'exécution.

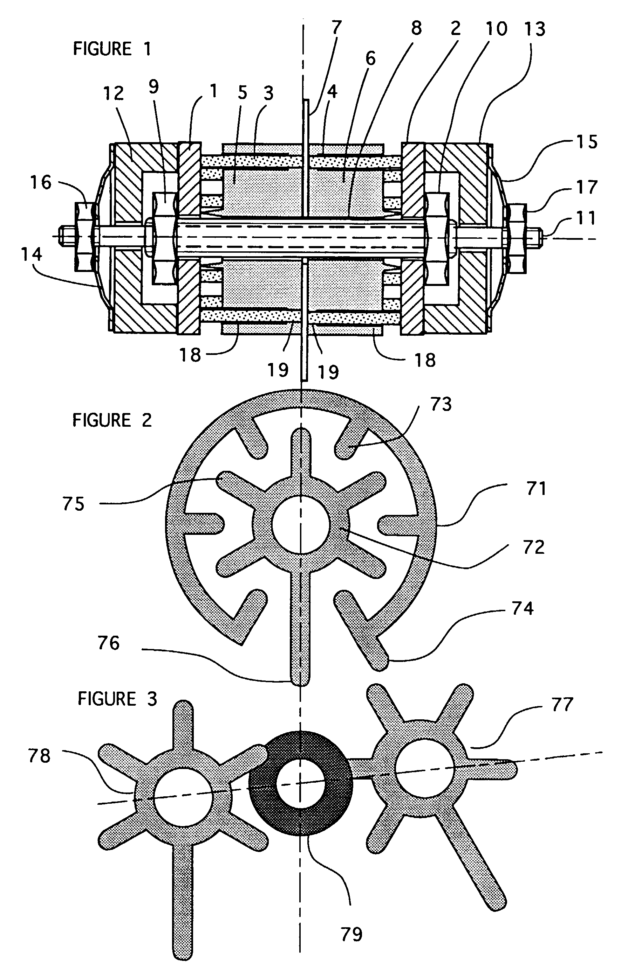

Le moteur représenté à la figure 1 comprend deux stators 1 et 2 en forme de disque. Ces disques sont, de préférence, découpés de manière à former un anneau relié à un moyeu par des rayons. Entre les stators, sont montés deux ensembles 3 et 4 de douze bâtonnets piézo-électriques cylindriques en céramique. Chacun de ces ensembles 3 et 4 est monté dans un barillet 5, respectivement 6 en matériau dielectrique. Les bâtonnets de chaque ensemble sont répartis en deux groupes de six bâtonnets répartis circulairement autour de l'axe du moteur avec un espace de 60° entre les bâtonnets d'un même groupe, les bâtonnets des deux groupes étant en outre intercalés de telle manière que l'on a un bâtonnet tous les 30°. Les ensembles de bâtonnets 3 et 4 et les barillets 5 et 6 sont pincés entre les deux stators 1 et 2, un connecteur 7 étant lui-même pincé entre les deux groupes de bâtonnets 3 et 4 pour leur alimentation en tension. L'assemblage des stators 1 et 2 et des barillets 5 et 6 avec leur bâtonnet est assuré par un tube fileté 8 sur lequel sont vissés des écrous 9 et 10 s'appuyant sur les stators, en particulier sur le moyeu de ces stators. Le tube 8 est traversé librement par un arbre 11 sur lequel sont calés deux rotors 12 et 13 en forme de pots cylindriques qui sont maintenus appliqués élastiquement contre les stators 1 et 2 par des ressorts 14 et 15 pressés par des écrous 16 et 17 vissés sur les extrémités filetées de l'arbre 11. Les ressorts 14 et 15 sont, par exemple, des rondelles Belleville.

Les barillets 5 et 6 sont percés d'autant de trous qu'il y a de bâtonnets. Sur la plus grande partie de leur longueur, ces trous présentent un diamètre 18 supérieur au diamètre des bâtonnets, de telle sorte que ces bâtonnets ne viennent pas en contact avec la paroi des trous lors de leur vibration. Sur une courte longueur, les trous des barillets présentent un rétrécissement 19 de diamètre tel que les bâtonnets sont maintenus par ce rétrécissement. Ces rétrécissements sont, de préférence, à proximité immédiate d'un noeud de vibration des bâtonnets de manière à ne pas perturber leur régime vibratoire stationnaire.

Le connecteur 7 est représenté à la figure 2. Il est constitué de deux pièces métalliques 71 et 72 formant deux pistes conductrices obtenues par découpage. La piste conductrice 71 entoure la pièce conductrice 72 présente six languettes 73 dirigées radialement vers le centre du connecteur, l'une de ces languettes présentant un prolongement extérieur 74 pour constituer une première broche de connexion d'un conducteur d'alimentation du moteur. La piste 72 présente six languettes 75 dirigées radialement vers l'extérieur et s'intercalant entre les languettes de la piste 71. L'une des languettes 75 est prolongée pour constituer la seconde broche de connexion du moteur. L'un des groupes de chacun des ensembles de bâtonnets 3 et 4 vient s'appuyer sur les languettes 73 de la piste 71, tandis que les autres bâtonnets viennent s'appuyer sur les languettes 75 de la piste 72 centrée par son trou central sur le tube 8.

Une variante d'exécution du connecteur de la figure 2 est représentée à la figure 3. Il est constitué de deux pistes découpées identiques 77 et 78 représentant chacune six languettes radiales, ces deux pistes étant superposées avec intercalation d'une rondelle 79 en matériau isolant et décalées angulairement de 30°.

Les faces en regard l'une de l'autre des barillets 5 et 6 sont munies de moyens de positionnement angulaires réciproques. Ces moyens de positionnement sont avantageusement constitués de profils conjugués permettant l'emboîtement des barillets l'un dans l'autre. Cet emboîtement est, de préférence, un emboîtement dur, de telle sorte que les barillets, une fois assemblés, constituent un module monolithique aisément manipulable. Le connecteur doit toutefois encore être positionné angulairement correctement entre les barillets qui recevront ensuite les bâtonnets piézo-électriques pour l'assemblage ultérieur du moteur.

Les barillets peuvent également être maintenus assemblés au moyen de pinces faisant partie des barillets ou d'agrafes de manière à constituer un sous-ensemble manipulable transportable et utilisable tel quel lors de la construction d'un moteur.

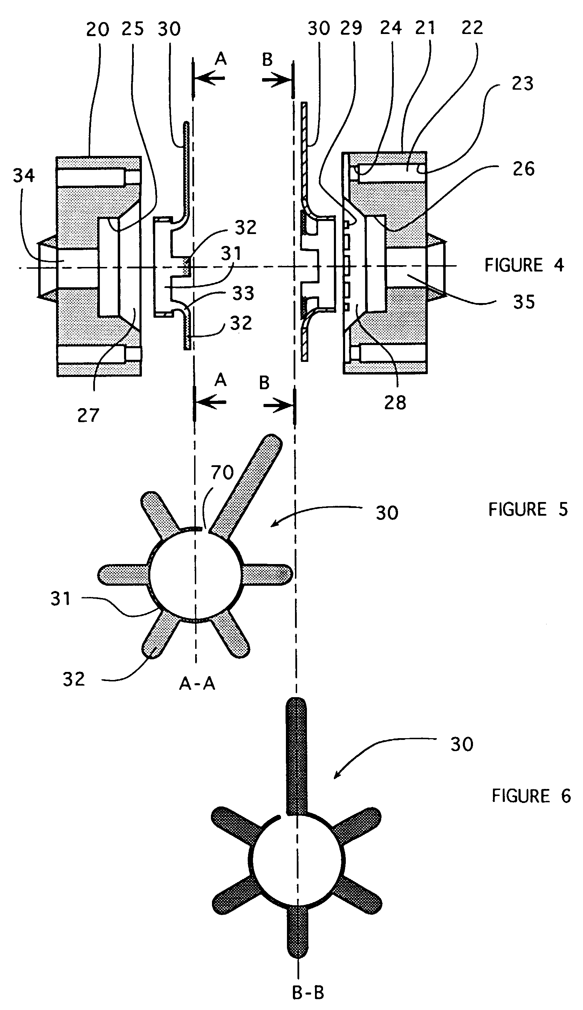

Les figures 4 à 9 illustrent un second mode d'exécution dans lequel les connecteurs peuvent être préassemblés à chacun des barillets dont l'un au moins présente des moyens de positionnement angulaires des deux pistes conductrices du connecteur. Les barillets 20 et 21 présentent, comme les barillets 5 et 6 du premier mode d'exécution, des trous 22 destinés à recevoir les bâtonnets piézo-électriques, ces trous 22 présentant un premier diamètre 23, sur la plus grande partie de leur longueur, supérieure au diamètre des bâtonnets, et un rétrécissement 24 assurant le maintien par pincement des bâtonnets dans le barillet. Sur leurs faces en regard l'une de l'autre, les barillets 20 et 21 présentent une creusure centrale cylindrique 25, respectivement 26, reliée à la face frontale du barillet par une partie tronconique 27, respectivement 28. La face frontale du barillet 21 présente en outre des rainures radiales 29, au nombre de douze et réparties régulièrement autour de l'axe du barillet, rainures dont le rôle sera décrit plus loin.

Les barillets 20 et 21 présentent en outre un trou central 34, respectivement 35 de diamètre correspondant au diamètre extérieur du tube 8 pour le centrage de ces barillets sur le tube 8.

Le connecteur est à nouveau constitué de deux pistes conductrices identiques 30. On se contentera donc de décrire la piste 30 également représentée à la figure 5. La piste 30 est en un matériau conducteur présentant une certaine élasticité. Elle comprend une partie cylindrique 31 munie d'une fente d'élasticité 70 et à partir de laquelle s'étendent six languettes radiales 32 dont l'une est plus longue que les autres de manière à constituer la broche extérieure de connexion du moteur. Ces languettes 32 sont reliées à la partie cylindrique 31 par une partie coudée arrondie 33, de telle sorte qu'elles sont déportées par rapport à la partie cylindrique 31 dans une direction parallèle à l'axe de la partie cylindrique 31.

A l'état libre, le diamètre extérieur de la partie cylindrique 31 de chacune des pistes 30 est supérieur au diamètre des logements cylindriques 25 et 26 des barillets. La profondeur de ces logements 25 et 26 est approximativement égale à la hauteur de la partie cylindrique 31.

Lors de l'assemblage des barillets 20 et 21 du connecteur, chacune des pistes 30 du connecteur est insérée dans le logement prévu dans le barillet. Cette insertion se fait par une simple pression sur la piste, les parties coniques 27 et 28 resserrant automatiquement les parties cylindriques 31 des pistes, ces parties 31 venant se fixer dans les barillets. La piste introduite dans le barillet 21 est positionnée angulairement dans ce barillet par l'engagement de ses languettes dans les rainures 29 dont la profondeur est égale à l'épaisseur de ces languettes. Les deux barillets 20 et 21, munis de leur piste 30, sont ensuite assemblés. On fait tourner la piste 30 du barillet 20 jusqu'à ce que ces languettes s'engagent dans les rainures 29 libres. Les deux pistes 30 sont ainsi correctement positionnées réciproquement angulairement. Comme dans le premier mode d'exécution, les deux barillets 20 et 21 présentent des moyens d'emboîtement et de positionnement angulaires réciproques de manière que leurs trous soient situés les uns en face des autres.

Selon une variante d'exécution, les deux barillets 20 et 21 présentent les rainures 29, mais celles-ci ont une profondeur égale à la moitié de l'épaisseur des pistes 30. Ceci permet d'avoir deux barillets parfaitement identiques, c'est-à-dire un seul moule pour la fabrication des barillets.

Selon une autre variante d'exécution, les parties 31 ne sont pas fendues et leur diamètre est égal au diamètre des logements 25 et 26.

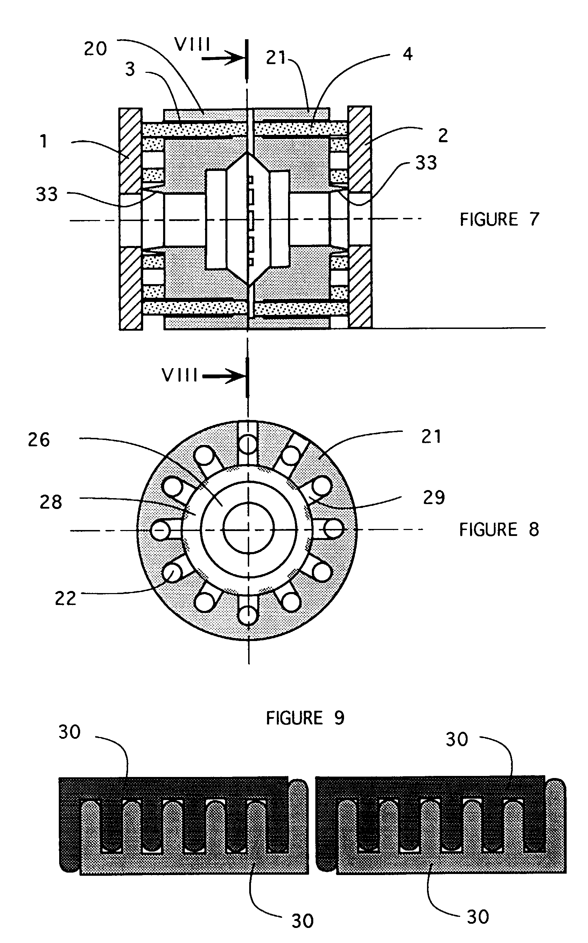

La figure 7 représente les barillets 20 et 21 équipés de leurs bâtonnets 3 et 4 et assemblés entre les deux stators 1 et 2, mais sans le connecteur. Afin de ne pas gêner la circulation de l'onde progressive dans les stators 1 et 2, un jeu important est laissé entre les barillets 3 et 4 et les stators 1 et 2. Comme les barillets doivent cependant être maintenus pressés l'un contre l'autre, ils présentent, côté stator, des protubérances 33 venant s'appuyer par une fine arête contre la partie centrale des stators. Si les stators sont réalisés comme décrits dans la demande de brevet FR N° 96 00061, ces protubérances s'appuient sur le moyeu du stator, c'est-à-dire dans la zone de précontrainte exercée par les écrous 9 et 10 (figure 1). L'absence du diélectrique du barillet autour des bâtonnets, entre les barillets et les stators, est sans importance car la différence de potentiel entre les bâtonnets est faible à cet endroit en raison de la proximité de la masse formée par le stator.

La zone de contact entre les bâtonnets et les languettes 32 du connecteur est, de préférence, réduite au minimum nécessaire afin d'éviter les effluves ou amorçages entre zones de contact contiguës, malgré la présence du diélectrique du barillet.

La figure 9 illustre le découpage des deux parties du connecteur 30. Il ressort de cette figure que le connecteur est particulièrement économique en matière première. La perte au découpage est minimale. Le connecteur est ensuite formé par pliage et roulage.

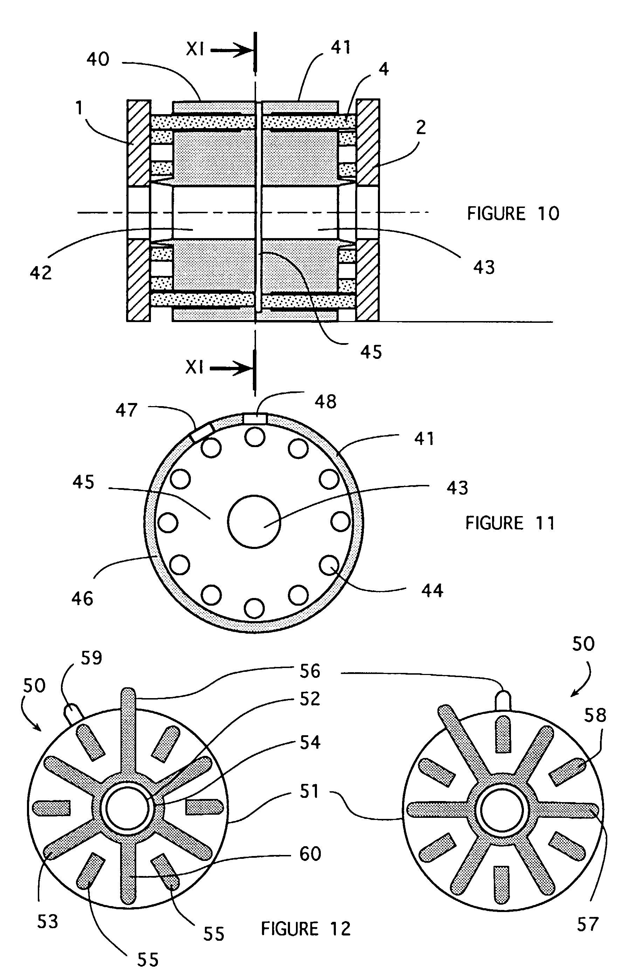

Une autre forme d'exécution des barillets et du connecteur est représentée aux figures 10 à 12. Les figures 10 et 11 représentent à nouveau les barillets sans le connecteur qui est représenté à la figure 12.

Les barillets 40 et 41 ne diffèrent des barillets 20 et 21 de la seconde forme d'exécution que par la configuration de leur faces en regard l'une de l'autre.

Ces barillets présentent un trou axial 42, respectivement 43 pour leur centrage sur le tube 8, figure 1. Le barillet 40 présente une face plane et uniforme en regard du barillet 41.

En plus des douze trous 44, pour le passage des bâtonnets de céramique, le barillet 41 présente une creusure circulaire 45, de faible profondeur, dans sa face en regard du barillet 40. Cette creusure 45 laisse subsister une collerette annulaire 46 interrompue par deux crénaux 47 et 48 situés en face de deux trous 44.

Le connecteur 50 est constitué d'un disque 51 en matériau isolant dont les deux faces sont représentées à la figure 12. Le disque 51 présente un trou circulaire central 52 pour son centrage sur le tube 8. Sur l'une des faces du disque 51 sont formés deux groupes de pistes conductrices, un premier groupe constitué de six languettes radiales 53 reliées par une partie centrale annulaire 54 et un deuxième groupe constitué de six segments de pistes conductrices indépendants 55 disposés entre les languettes 53 du premier groupe.

L'une des languettes 53 est prolongée hors de la périphérie du disque 51 pour constituer une borne de connexion extérieure 56. L'autre face du disque 51 présente, de manière identique, un premier groupe de pistes conductrices constitué de six languettes 57 reliées par une partie centrale annulaire et un second groupe constitué de six segments de pistes conductrices indépendants 58 situés entre les languettes 57 du premier groupe. L'une des languettes 57 est prolongée hors de la périphérie du disque 51 pour constituer l'autre borne de connexion extérieure. Les segments de pistes indépendants 55 et 58 sont donc situés en face d'une languette conductrice de la face opposée du disque et ils sont reliés galvaniquement à cette languette par un trou métallisé à travers le disque, trou situé en 60.

Le disque 51 vient se loger dans le logement 45 du barillet 41, logement dont la profondeur est égale à l'épaisseur du disque avec ses pistes conductrices. Le disque 51 est également centré par le logement 45.

De manière à obtenir, pour le moulage, deux barillets identiques, il serait, bien entendu, possible de remplacer la creusure 45 par deux creusures de demi-profondeur sur chacun des barillets.

Les languettes prolongées 56 et 59 viennent se loger dans les crénaux 47 et 48 qui positionnent ainsi angulairement le connecteur.

Le moteur selon l'invention est, bien entendu, réalisable avec un seul stator et un seul rotor, c'est-à-dire un seul barillet et un seul groupe de bâtonnets. Dans ce cas, l'extrémité de l'arbre 11 opposée au rotor est simplement supportée par un palier à billes.

## Revendications

1. Moteur piézo-électrique à onde progressive comprenant au moins un stator (1, 2) constitué d'un corps annulaire auquel sont associés deux groupes d'éléments piézo-électriques (3, 4) constitués de bâtonnets cylindriques de céramique polarisés indépendants les uns des autres, disposés perpendiculairement au stator, c'est-à-dire parallèlement à l'axe du moteur, répartis sur le stator, en contact permanent, par l'une de leurs extrémités, avec le stator et, par l'autre extrémité, avec un connecteur (7 ; 30 ; 50) par l'intermédiaire duquel les bâtonnets sont excités par un courant alternatif avec un déphasage de π/2 entre les groupes de bâtonnets de manière à engendrer à la surface du stator une déformation en forme d'onde progressive, et un rotor (12, 13) maintenu élastiquement en contact avec le stator pour son entraînement en rotation par l'onde progressive engendrée sur le stator, caractérisé en ce que les bâtonnets (3, 4) sont logés dans un barillet (5, 6 ; 20, 21 ; 40, 41) en matériau isolant dont les trous, contenant chacun un bâtonnet, ont un diamètre supérieur au diamètre des bâtonnets sur la plus grande partie de leur longueur et un rétrécissement (24) de diamètre approximativement égal au diamètre des bâtonnets de manière à maintenir les bâtonnets par frottement.

2. Moteur selon la revendication 1, caractérisé en ce que la position desdits rétrécissements (24) est telle que les bâtonnets sont tenus à proximité immédiate d'un noeud de vibration.

3. Moteur selon la revendication 1 ou 2, caractérisé en ce qu'il est constitué d'une paire de barillets (5, 6) disposés coaxialement entre deux stators coaxiaux (1, 2) associés chacun à un rotor (12, 13) de part et d'autre d'un connecteur central (7), et des moyens d'assemblage axial (8, 9, 10) exerçant une pression sur les stators de telle sorte que les barillets sont pressés l'un contre l'autre que les bâtonnets sont comprimés axialement entre les stators et le connecteur.

4. Moteur selon la revendication 3, caractérisé en ce que les barillets sont munis de moyens de positionnement angulaire réciproques, en particulier constitués de profils conjugués.

5. Moteur selon la revendication 3 ou 4, caractérisé en ce que les barillets présentent, côté stator, des aspérités (33) sur lesquelles viennent presser les stators.

6. Moteur selon l'une des revendictions 3 à 5, caractérisé en ce que les faces, en regard l'une de l'autre, des barillets (20, 21) présentent un logement central cylindrique (25, 26) et que le connecteur (30) est constitué de deux pièces métalliques présentant chacune une partie centrale cylindrique (31) d'où partent des languettes radiales (32), la partie cylindrique (31) étant logée dans ledit logement du barillet, les languettes radiales des deux pièces étant décalées angulairement les unes par rapport aux autres.

7. Moteur selon la revendication 6, caractérisé en ce que la profondeur desdits logements cylindriques (25, 26) des barillets est supérieure à la hauteur de la partie cylindrique fendue (31) du connecteur, que les languettes radiales (32) sont déportées axialement relativement à la partie cylindrique fendue et que lesdites parties cylindriques fendues sont en retrait de la face des barillets correspondants, de telle manière que les deux pièces du connecteur ne peuvent venir en contact l'une avec l'autre.

8. Moteur selon la revendication 7, caractérisé en ce que l'un des barillets (21) présente, dans sa face recevant le connecteur (30), des rainures radiales (29) dans lesquelles sont logées et positionnées angulairement les languettes (32) des connecteurs, la profondeur de ces rainures étant au moins approximativement égale à l'épaisseur des languettes.

9. Moteur selon la revendication 7, caractérisé en ce que les faces des barillets (20, 21) recevant le connecteur (30) présentent chacune des rainures radiales situées en face les unes des autres, dans lesquelles sont logées et positionnées les languettes du connecteur, la profondeur de ces rainures étant au moins approximativement égale à une demi-épaisseur des languettes (32).

10. Moteur selon l'une des revendications 3 à 5, caractérisé en ce que le connecteur (50) est constitué d'un disque (51) en matière isolante dont les deux faces sont munies de deux groupes de pistes conductrices, un premier groupe (53, 57) constitué de languettes radiales reliées à une partie centrale annulaire et un second groupe (55, 58) constitué de segments indépendants situés entre les languettes, les segments d'une face étant reliés galvaniquement aux languettes correspondantes des autres faces à travers le disque.

11. Moteur selon la revendication 10, caractérisé en ce qu'au moins un des barillets (41) présente un logement (45) dans lequel est logé et centré le connecteur (50).

## Patentansprüche

1. Piezo-Wanderwellenmotor mit mindestens einem Stator (1, 2), der aus einem ringförmigen Körper besteht, dem zwei Gruppen von piezoelektrischen Elementen (3, 4) zugeordnet sind, die aus voneinander unabhängigen zylindrischen Stäbchen aus polarisierter Keramik bestehen, die senkrecht zum Stator, das heißt parallel zur Motorachse, angeordnet und mit einem ihrer Enden mit dem Stator und mit dem anderen Ende mit einem Verbinder (7; 30; 50) im Dauerkontakt über den Stator verteilt sind, wobei die Stäbchen mittels des Verbinders durch einen Wechselstrom mit einer Phasenverschiebung von π/2 zwischen den Stäbchengruppen erregt werden, so daß sie auf der Oberfläche des Stators eine wanderwellenförmige Verformung erzeugen, und einem Rotor (12, 13), der zu seinem Drehantrieb durch die an dem Stator erzeugte Wanderwelle mit dem Stator in elastischem Kontakt gehalten wird, dadurch gekennzeichnet, daß die Stäbchen (3, 4) in einer aus Isoliermaterial bestehenden Trommel (5, 6; 20, 21; 40, 41) untergebracht sind, deren Löcher; die jeweils ein Stäbchen enthalten, einen größeren Durchmesser als der Durchmesser der Stäbchen über den Großteil ihrer Länge und eine Verengung (24), deren Durchmesser ungefähr gleich dem Durchmesser der Stäbchen ist, aufweisen, so daß die Stäbchen durch Reibung festgehalten werden.

2. Motor nach Anspruch 1, dadurch gekennzeichnet, daß die Verengungen (24) so positioniert sind, daß die Stäbchen in unmittelbarer Nähe eines Schwingungsknotens gehalten werden.

3. Motor nach Anspruch 1 oder 2, dadurch gekennzeichnet, daß er aus einem Paar von Trommeln (5, 6), die koaxial zwischen zwei koaxialen Statoren (1, 2), die jeweils auf beiden Seiten eines mittleren Verbinders (7) einem Rotor (12, 13) zugeordnet sind, angeordnet sind, und Mitteln (8, 9, 10) zur axialen Montage besteht, die auf die Statoren einen solchen Druck ausüben, daß die Trommeln aneinandergepreßt werden, so daß die Stäbchen axial zwischen den Statoren und dem Verbinder zusammengedrückt werden.

4. Motor nach Anspruch 3, dadurch gekennzeichnet, daß die Trommeln mit gegenseitigen Mitteln zur winkelförmigen Positionierung versehen sind, die insbesondere aus zusammenpassenden Profilen bestehen.

5. Motor nach Anspruch 3 oder 4, dadurch gekennzeichnet, daß die Trommeln auf der Statorseite Unebenheiten (33) aufweisen, an die die Statoren gepreßt werden.

6. Motor nach einem der Ansprüche 3 bis 5, dadurch gekennzeichnet, daß die einander gegenüberliegenden Flächen der Trommeln (20, 21) eine zylindrische mittlere Aufnahme (25, 26) aufweisen und daß der Verbinder (30) aus zwei Metallstücken besteht, die jeweils einen zylindrischen mittleren Teil (31) aufweisen, von dem radiale Zungen (32) ausgehen, wobei der zylindrische Teil (31) in der Aufnahme der Trommel untergebracht ist und die radialen Zungen der beiden Stücke bezüglich einander winkelförmig versetzt sind.

7. Motor nach Anspruch 6, dadurch gekennzeichnet, daß die Tiefe der zylindrischen Aufnahmen (25, 26) der Trommeln größer ist als die Höhe des geschlitzten zylindrischen Teils (31) des Verbinders, daß die radialen Zungen (32) bezüglich des geschlitzten zylindrischen Teils axial verschoben sind und daß die geschlitzten zylindrischen Teile von der Fläche der dazugehörigen Trommeln zurückgesetzt sind, so daß die beiden Stücke des Verbinders nicht miteinander in Kontakt kommen können.

8. Motor nach Anspruch 7, dadurch gekennzeichnet, daß eine der Trommeln (21) in ihrer den Verbinder (30) aufnehmenden Fläche Radialnuten (29) aufweist, in denen die Zungen (32) der Verbinder winkelförmig aufgenommen und positioniert sind, wobei die Tiefe dieser Nuten zumindest ungefähr gleich der Dicke der Zungen ist.

9. Motor nach Anspruch 7, dadurch gekennzeichnet, daß die den Verbinder (30) aufnehmenden Flächen der Trommeln (20, 21) jeweils Radialnuten aufweisen, die einander gegenüber angeordnet sind, in denen die Zungen des Verbinders aufgenommen und positioniert sind, wobei die Tiefe dieser Nuten zumindest ungefähr gleich der halben Dicke der Zungen (32) ist.

10. Motor nach einem der Ansprüche 3 bis 5, dadurch gekennzeichnet, daß der Verbinder (50) aus einer Scheibe (51) aus Isoliermaterial besteht, deren beiden Flächen mit zwei Gruppen von leitenden Bahnen versehen sind, wobei eine erste Gruppe (53, 57) aus radialen Zungen besteht, die mit einem ringförmigen mittleren Teil verbunden sind, und eine zweite Gruppe (55, 58) aus unabhängigen Segmenten besteht, die sich zwischen den Zungen befinden, wobei die Segmente einer Fläche durch die Scheibe mit den entsprechenden Zungen der anderen Flächen galvanisch verbunden sind.

11. Motor nach Anspruch 10, dadurch gekennzeichnet, daß mindestens eine der Trommeln (41) eine Aufnahme (45) aufweist, in der der Verbinder (50) untergebracht und zentriert ist.

## Claims

1. A traveling-wave piezoelectric motor comprising at least one stator (1, 2) comprising an annular body with which are associated two groups of piezoelectric elements (3, 4) formed by cylindrical ceramic rods which are polarized independent of one another, are arranged perpendicularly to the stator, that is to say parallel to the axis of the motor, and are distributed around the stator, in permanent contact, via one of their ends, with the stator and, via the other end, with a connector (7; 30; 50) by way of which the rods are excited by an alternating current with a phase-shift of π/2 between the groups of rods so as to generate on the surface of the stator a deformation in the form of a traveling wave, and a rotor (12, 13) held elastically in contact with the stator for the rotational driving thereof by the traveling wave generated on the stator, characterised in that the rods (3, 4) are housed in a drum (5, 6; 20, 21; 40, 41) made of an insulating material whose holes, each containing a rod, have a diameter greater than the diameter of the rods over the greater part of their length and a constriction (24) of diameter approximately equal to the diameter of the rods so as to hold the rods by friction.

2. The motor as claimed in claim 1, characterised in that the position of said constrictions (24) is such that the rods are retained in the immediate proximity of a vibration node.

3. Motor as claimed in claim 1 or 2, characterised in that it comprises a pair of drums (5, 6) arranged coaxially between two coaxial stators (1, 2) each associated with a rotor (12, 13) on either side of a central connector (7), and means of axial assembly (8, 9, 10) exerting a pressure on the stators such that the drums are pressed together so that the rods are compressed axially between the stators and the connector.

4. The motor as claimed in claim 3, characterised in that the drums are provided with mutual means of angular positioning, in particular formed by mating profiles.

5. The motor as claimed in claim 3 or 4, characterised in that the drums, on the stator side, is provided with prominences (33) onto which the stators are pressed.

6. The motor as claimed in one of claims 3 to 5, characterised in that the opposed faces of the drums (20, 21) have a cylindrical central housing (25, 26) and in that the connector (30) is formed by two metal pieces each having a cylindrical central part (31) from which radial tongues (32) extend, the cylindrical part (31) being housed in said housing of the drum, the radial tongues of the two pieces being angularly staggered with respect to each other.

7. The motor as claimed in claim 6, characterised in that the depth of said cylindrical housings (25, 26) of the drums is greater than the height of the slotted cylindrical part (31) of the connector, in that the radial tongues (32) are offset axially relative to the slotted cylindrical part and in that said slotted cylindrical parts are set back from the face of the corresponding drums, in such a way that the two pieces of the connector may not come into contact with one another.

8. The motor as claimed in claim 7, characterised in that one of the drums (21) has, in its face receiving the connector (30), radial grooves (29) in which the tongues (32) of the connectors are housed and angularly positioned, the depth of these grooves being at least approximately equal to the thickness of the tongues.

9. The motor as claimed in claim 7, characterised in that the faces of the drums (20, 21) receiving the connector (30) each have radial grooves facing one another, in which the tongues of the connector are housed and positioned, the depth of these grooves being at least approximately equal to a half-thickness of the tongues (32).

10. The motor as claimed in one of claims 3 to 5, characterised in that the connector (50) is formed by a disk (51) made of an insulating material, the two faces of which are provided with two groups of conducting tracks, a first group (53, 57) formed by radial tongues linked to an annular central part and a second group (55, 58) formed by independent segments situated between the tongues, the segments of one face being galvanically linked to the corresponding tongues of the other faces across the disk.

11. The motor as claimed in claim 10, ,characterised in that at least one of the drums (41) has a housing (45) in which the connector (50) is housed and centered.
